# EUROPÄISCHE PATENTANMELDUNG

(11) **EP 3 972 095 A1**
(43) Veröffentlichungstag der Anmeldung: **23.03.2022**
(21) Anmeldenummer: 20196796.5
(22) Anmeldetag: 18.09.2020
(51) Int. Cl.: H02K 11/01, H02K 11/40, H02K 5/128, H02K 5/16, H02K 7/08, H02K 7/18, H02K 9/197

(54) **SPALTROHR EINER DYNAMOELEKTRISCHEN MASCHINE**

(71) Anmelder: Siemens Aktiengesellschaft, 80333 München (DE)
(72) Erfinder: Jöckel, Andreas, 90408 Nürnberg (DE); Zeichfüßl, Roland, 94099 Ruhstorf a. d. Rott (DE)
(74) Vertreter: Michalski Hüttermann & Partner Patentanwälte mbB

(57) **Zusammenfassung**

Die Erfindung betrifft ein Spaltrohr (11) einer dynamoelektrischen rotatorischen Maschine (1), welches ausgebildet ist, um in einem Luftspalt (12) zwischen einem Rotor (17) und einem Stator (2) der dynamoelektrischen rotatorischen Maschine (1) angeordnet zu werden, um Stator (2) und Rotor (17) gegeneinander abzudichten, wobei das Spaltrohr (11) zumindest abschnittsweise eine mittlere elektrische Leifähigkeit aufweist, die in axialer und/oder tangentialer Richtung im Bereich von 1 S/m bis 10000 S/m liegt.

## Beschreibung

Die Erfindung betrifft ein Spaltrohr einer dynamoelektrischen Maschine, eine dynamoelektrische Maschine, eine Getriebe-Generator-Anordnung mit einer dynamoelektrischen Maschine, als auch eine Windkraftanlage mit einer Getriebe-Generator-Einheit.

Spannungseinprägende Umrichter erzeugen in dynamoelektrischen Maschinen (Motoren oder Generatoren) eine sogenannte Common-Mode-Spannung, mit der die Wicklung des Stators ständig aufgeladen und wieder entladen wird. Entsprechend einem der Geometrie der Maschine folgenden kapazitiven Teilerverhältnis, wird diese Spannung auf den Rotor übertragen und liegt als kapazitive Spannung über dem Lager an. Diese Lagerspannungen können in Wälzlagern oder an die Welle angeschlossenen Maschinen oder Komponenten große Schäden durch EDM (Electric Discharge Machining)-Effekte verursachen. Insbesondere können in direkt angeschlossenen Arbeitsmaschinen, z.B. Getrieben (bei sog. Getriebemotoren oder Getriebegeneratoren) nicht nur die Lagerungen, sondern auch die Verzahnungen durch die EDM (Electric Discharge Machining)-Ströme schweren Schaden nehmen.

Des Weiteren erzeugen diese Umrichter durch den rapiden Stromanstieg einen Ringfluss im Statorjoch, der im Rotor zu einer Spannung zwischen den beiden axialen Wellenenden führt.

Bisher werden die kapazitiven Lagerspannungen durch mehr oder weniger aufwändige Lagerisolationen geblockt oder durch Erdungsbürsten zwischen Stator und Rotor abgeleitet. In schwierigen Fällen, wie z.B. doppeltgespeisten Maschinen müssen kosten- und wartungsintensive Maßnahmen getroffen werden, d.h. Realisierung einer Lagerisolation plus Einbau von Erdungsbürsten und deren ständiger Überwachung.

Ausgehend davon liegt der Erfindung die Aufgabe zugrunde eine leistungsfähige dynamoelektrische Maschine zu schaffen, die die oben genannten Nachteile vermeidet, ein zuverlässiges einfaches Erdungskonzept aufweist, und gleichzeitig eine hohe Leistungsdichte aufweist.

Die Lösung der gestellten Aufgabe gelingt durch ein Spaltrohr einer dynamoelektrischen rotatorischen Maschine, welches ausgebildet ist, um in einem Luftspalt zwischen einem Rotor und einem Stator der dynamoelektrischen rotatorischen Maschine angeordnet zu werden, um Stator und Rotor gegeneinander abzudichten, wobei das Spaltrohr zumindest abschnittsweise eine mittlere elektrische Leifähigkeit aufweist, die in axialer und/oder tangentialer Richtung im Bereich von 1 S/m bis 10000 S/m liegt.

Die Lösung der gestellten Aufgabe gelingt auch durch eine dynamoelektrische rotatorische Maschine mit:
- einem Stator, der ein in Nuten angeordnetes Wicklungssystem aufweist, das an den Stirnseiten des Stators Wickelköpfe ausbildet,
- einem Rotor, der durch einen Luftspalt von dem Stator beabstandet und mit einer Welle drehfest verbunden ist, wobei die Welle durch zumindest ein Lager um eine Achse drehbar positioniert ist,
- einem Spaltrohr, das sich im Luftspalt befindet und einen Innenraum des Stators vom Innenraum des Rotors trennt, wobei das Spaltrohr zumindest abschnittsweise eine mittlere elektrische Leifähigkeit aufweist, die in axialer und/oder tangentialer Richtung im Bereich von 1 S/m bis 10000 S/m liegt, und in das Erdungssystem der dynamoelektrischen rotatorischen Maschine eingebunden ist, insbesondere mit einem Gehäuse und/oder einem Lagerschild elektrisch leitend verbunden ist.

Die Lösung der gestellten Aufgabe gelingt auch durch eine Getriebe-Generator-Einheit mit einer dynamoelektrische rotatorische Maschine mit einem erfindungsgemäßen Spaltrohr, wobei das Spaltrohr und die elektrische Maschine in ein Erdungssystem der Getriebe-Generator-Einheit eingebunden ist, insbesondere mit einer niedrigen Impedanz elektrisch leitend verbunden sind.

Die Lösung der gestellten Aufgabe gelingt auch durch eine Windkraftanlage mit einer erfindungsgemäßen Getriebe-Generator-Einheit, wobei insbesondere das Spaltrohr, die dynamoelektrische Maschine, und die Getriebe-Generator-Einheit in ein Erdungssystem der Windkraftanlage eingebunden ist, diese Komponenten insbesondere mit einer niedrigen Impedanz elektrisch leitend verbunden sind.

Dynamoelektrische Maschinen benötigen für eine ordnungsgemäße Funktionsweise eine ausreichende Kühlung ihrer Komponenten, wie Stator oder Rotor. Diese Kühlung erfolgt durch Luft und/oder durch Flüssigkeit. Bei kombinierten Kühlungsarten sind dabei Stator und Rotor voneinander durch ein Spaltrohr zu trennen.

Derartige Spaltrohre - auch als Stator-Can bezeichnet - werden beispielsweise in flüssigkeitsgekühlten elektrischen Maschinen verwendet und dort im Luftspalt zwischen Stator und Rotor angeordnet. Das Spaltrohr übt dort eine hermetische Dichtfunktion aus und verhindert, dass eine Kühlflüssigkeit, welche bspw. zur Kühlung des Stators eingesetzt wird, in den Luftspalt oder in den Innerraum des Rotors gelangt. Das Spaltrohr separiert die Kühlflüssigkeit im Statorbereich von dem sich drehenden Rotor, da dessen Drehung aufgrund der Viskosität der Kühlflüssigkeit und den sich somit ergebenden Reibungsverlusten stark behindert würde, wenn diese Flüssigkeit vom Statorbereich in den Rotorbereich gelangen würde.

Erfindungsgemäß wird nun dieses Spaltrohr (= Stator-Can) nicht nur zur Kapselung des Innenraumes des Stators genutzt, sondern wird auch Teil eines Erdungssystems einer dynamoelektrischen Maschine. Dabei weist dieses Spaltrohr eine vorgebbare elektrische Leitfähigkeit auf, die mittels eines leitfähigen Materials (insbesondere CFK oder GFK) umgesetzt wird. Dabei weist bereits implizit das Material die gewünschte elektrische Leitfähigkeit auf und/oder es wird ein nicht oder schwach leitfähiges Basismaterial mit einer oder mehreren elektrisch leitfähigen Schichten versehen.

Dieses Spaltrohr wird in das Erdungssystem von einer dynamoelektrischen Maschine und/oder einer Getriebe-Generator-Einheit und/oder Windkraftanlage elektrisch leitend eingebunden. So kann das Spaltrohr über eine Erdung zum Gehäuse den "Kondensator" zwischen Stator und Rotor "zerstören" und damit die Entstehung der kapazitiven Lagerspannung verhindern oder zumindest sehr stark verkleinern.

Wenn nunmehr dieses Spaltrohr zusammen mit einem rein auf einer Seite gelagerten Rotor (fliegend gelagert) verwendet wird, wird die elektrische Spannung an beiden axialen Wellenenden durch den parasitären Ringfluss vermieden. Durch die Lagerung auf einer Seite wird dort das elektrische Potential des Rotors nahe am Gehäusepotential gehalten und die resultierende Spannung am anderen, freien Wellenende kann nicht zu einer Schädigung eines Lagers führen.

Vorteilhaft ist auch, wenn andere Bauteile mit Erdkontakt oder einer gewissen Kapazität Richtung Erde (z.B. Bremsen, Drehgeber, etc.) nicht auf der Seite des freien Wellenendes (ohne Lager) montiert sind, sondern auf der Seite dieser Lagerung angeordnet sind.

Der erfindungsgemäße Gedanke ist auch bei beidseitig gelagerten Wellen umsetzbar. Er wirkt dort allerdings nur gegen kapazitive Lagerspannungen und nicht gegen ringfluss-erregte Lagerströme aufgrund Umrichterspeisung oder klassische Wellenspannungen aufgrund elektromagnetischer Unsymmetrien.

Erfindungsgemäß weist das verwendete Spaltrohr (= Stator-Can) folgende Vorteile auf.

"Normalerweise" würde man versuchen, das Spaltrohr unbedingt elektrisch isolierend auszuführen, damit dort im Betrieb der dynamoelektrischen Maschine möglichst wenig Wirbelströme elektromagnetisch induziert werden, die zur Aufheizung des Spaltrohres beitragen. Damit würde sich auch die Effizienz der dynamoelektrischen Maschine reduzieren.

Jedoch wird nun erfindungsgemäß ein Material des Spaltrohres und/oder eine Beschichtung des Spaltrohres verwendet, das für die kapazitive Erdung ausreichend leitfähig ist, aber gleichzeitig ausreichend isolierend ist, damit es nicht zu viele Wirbelstromverluste durch die Elektromagnetik erfährt, die zu einer unzulässigen Aufheizung führen würden.

Dabei weist das Spaltrohr eine mittlere elektrische Leifähigkeit auf, die in axialer und/oder tangentialer Richtung im Bereich von 1 S/m bis 10000 S/m liegt. Da das Spaltrohr (CFK- oder GFK-Rohre) und/oder die verwendeten Beschichtungen (Lacke oder Folien) ggf. inhomogen aufgebaut sind, wird von einer mittleren elektrischen Leitfähigkeit gesprochen.

Die mittlere elektrische Leifähigkeit des Spaltrohres, die in axialer und/oder tangentialer Richtung im Bereich von 1 S/m bis 10000 S/m liegt, bezieht sich insbesondere auf eine (radiale) Dicke von 1 mm. Bei entsprechend dünnerer oder dickerer Schichtstärke miss die elektrische Leitfähigkeit entsprechend höher bzw. niedriger sein.

Eine besonders gute Schirmwirkung wurde beispielsweise bei einer Beschichtung von 1mm Bezugsdicke und einer Leitfähigkeit von über 100 S/m erzielt.

Des Weiteren werden durch Realisierung der Beschichtung auf der dem Stator zugewandten Seite des Spaltrohrs nunmehr nicht vermeidbare Wirbelstromverluste des Spaltrohrs oder der Beschichtung durch die dem Stator zugewiesene Flüssigkeitskühlung sofort abgeführt, d.h. die Temperaturen werden auf einem vergleichsweise niederen Niveau begrenzt gehalten.

Damit ergibt sich eine kostenminimale und verschleißfreie Unterdrückung der kapazitiven Lagerspannungen und damit Verhinderung der EDM-Effekte in den angeschlossenen Lagerungen und/oder Verzahnungen eines zugeschaltbaren Getriebes oder einer Arbeitsmaschine.

Bei einer einseitigen Lagerung der dynamoelektrischen Maschine, beispielsweise eines Generators, ergibt sich noch ein weiterer positiver Aspekt: Durch die kapazitive und/oder ohmsche Wirkung der Lagerung (oder der Verzahnung im Falle eines direkt angeflanschten Getriebes) wird das Potential der Welle im Bereich des Lagers auf Gehäusepotential gehalten. Eine Lagerisolation oder Erdungsbürste ist nicht notwendig.

Das Spaltrohr ist alternativ auch aus einer oder mehreren Lagen aufgebaut, die unterschiedliche elektrische Leitfähigkeiten aufweisen können.

Dabei sind u.a. Spaltrohre denkbar, mit einer oder mehreren übereinander oder nebeneinander angeordneten Lagen aus unterschiedlichen Kunststoffen. Diese Kunststoffe können faserverstärkt sein, insbesondere mit Glasfasern (GFK) oder Kohlefaser (CFK). Die Dicken der Lagen können zwischen 0,1 mm und 10 mm liegen. Eine ausreichend hohe mechanische Stabilität ist bisherigen Anwendungen bei Schichtdicken im Bereich von 1 bis 3 mm erreicht worden.

In einer Ausführung der Erfindung ist ein nahezu elektrisch isolierendes Spaltrohr mit einer nicht oder nur schwach elektrisch leitfähigen Beschichtung versehen, wie z.B. Kupferleitlack. Dieser Lack weist eine vorgebbare Partikeldichte pro Flächeneinheit auf, um die erforderliche elektrische Leitfähigkeit zu erhalten.

Diese Beschichtung kann an dem Spaltrohr außen und/oder innen angebracht werden. Eine beidseitige Beschichtung hat eine verbesserte Wirkungsweise, ist jedoch in der Herstellung kostenaufwändiger.

Alternativ und/oder ergänzend dazu kann diese leitfähige Schicht auch als Folie ausgeführt sein, z.B. aus dementsprechend leitfähigen Materialen wie Edelstahl, Alu, Kupfer, etc.

Gute Ergebnisse wurden mit einer Beschichtung auf eine Basismaterial mit typischerweise 50 bis 200 Mikrometer erzielt, bei Folien wurden mit typischerweise 4 bis 20 Mikrometer ebenfalls gute Ergebnisse erzielt. Es ist jedoch davon auszugehen, dass auch bei Schichtdicken von 1 bis 500 Mikrometer ausreichende Ergebnisse (ausreichende Leitfähigkeit zur Reduzierung der Lagerspannung) zu erwarten sind.

Um eine hohe Schirmwirkung des Spaltrohres zu erreichen und gleichzeitig die Verluste aus Wirbelströmen gering zu halten, ist eine inhomogene Leitfähigkeit der leitfähigen Schicht vorteilhaft, indem beispielsweise nur Streifen aufgebracht werden. Diese Streifen können lückenhaft mit vorgebbaren Abständen ausgeführt sein, um die Wirbelstromverluste zu minimieren.

Für eine hohe Schirmwirkung können die Streifen aber auch überlappend, beispielsweise schindelförmig ausgeführt werden. Um dabei die Wirbelstromverluste zu begrenzen, sollte dazwischen ein Isolator sein.

Die Streifen können auch als elektrisch schwach leitfähiger Lack abschnittsweise wechselnd mit einem elektrisch höher leitfähigen Lack kombiniert werden.

Unter elektrisch schwach leitfähig wird dabei bei einer Dicke der Beschichtung/Folie von 100 Mikrometern eine Leitfähigkeit von ca. 10 S/m verstanden. Unter elektrisch höher leitfähig wird dabei bei einer Dicke der Beschichtung/Folie von 100 Mikrometer eine Leitfähigkeit von ca. 1000 S/m verstanden.

Die leitfähige Schicht kann sich auch auf die Bereiche der Nutöffnungen des Stators und ggf. zusätzlich den Bereich der Wickelköpfe beschränken, da die Statorzähne in der Regel bereits über das Statorblechpaket mit Gehäusepotential verbunden sind.

Dabei sind die elektrischen Leitfähigkeiten in den oben genannten Bereichen anzusiedeln.

Die leitfähige Schicht bzw. die leitfähigen Schichten sind auf mindestens einer Seite der dynamoelektrischen Maschine mit dem Gehäusepotential elektrisch sehr gut leitfähig und mit geringer Induktivität verbunden. Dazu werden flexible Erdungsbänder (z.B. Kabel oder Kupfergeflecht) verwendet, um u.a. unterschiedliche thermische Dehnungen auszugleichen. Unter Umständen sind mehrere Erdungsleitungen am Umfang verteilt nötig.

Alternativ und/oder ergänzend können auch ein oder mehrere federnde Kontaktstifte verwendet werden, um die u.a. thermische Ausdehnungen u.a. des Spaltrohres zu kompensieren und dennoch eine ausreichende elektrische Leitfähigkeit der Erdverbindung zu erhalten.

Um eine bessere elektrische Anbindung zwischen mäßig leitfähiger Schicht und Gehäuse zu erzielen, kann an den Stirnbereichen des Spaltohres, also dort wo keine hohen magnetischen Felder auftreten, ein sehr gut leitfähiges Bauteil, z.B. ein Kupferring, installiert werden, der in das Erdungssystem der Maschine oder einer ganzen Anlage eingebunden ist.

Dabei sind auch mehrere Kontaktanbindungen des Spaltrohres mit dem Erdungssystem des Gehäuses möglich, wie z.B. Stifte, federnde Kontaktstifte, flexible Erdungsbänder, Kupferring (ev. geschlitzt) am Spaltrohr. Es ist jedoch darauf zu achten, dass sich keine elektrisch leitenden Maschen ausbilden, die zu induktiven Einkopplungen führen könnten.

Wird bei einseitiger Erdung die gegenüberliegende Seite des Spaltrohres (also dort wo kein Lager ist) vergleichsweise gut gegenüber dem Gehäusepotential isoliert, z.B. über eine Dichtung und/oder eine Beabstandung, so wird eine besondere gute Schirmwirkung erzielt und die Ströme im Spaltrohr vermieden, die sich ansonsten im Strompfand "Spaltrohr, Verbindung zu Gehäusepotential auf einer Seite , Gehäuse, Verbindung zu Gehäusepotential auf der gegenüberliegenden Seite" zurück in das Spaltrohr ergeben würden.

Eine Verbindung auf beiden Seiten des Generators mit Gehäusepotential ist möglich und erzielt vor allem bei Umrichtern mit langsam ansteigenden Spannungsflanken (einigen 100 µs) eine verbesserte Schirmwirkung.

Das Spaltrohr, insbesondere die leitfähige(n) Schicht(en) des Spaltrohres sind anstatt oder ergänzend zu dem Gehäuse auch mit anderen Bauteilen elektrisch verbunden, um eine Schirmwirkung zu entfalten, z.B. direkt auf Erdpotential oder mit einer Leitung direkt zum Umrichter.

Ein derartiges Spaltrohr kann bei dynamoelektrischen Maschinen bei Windkraftanlagen mit und ohne Getriebe, bei Großmaschinen, die insbesondere direkt mit Arbeitsmaschinen verbunden sind auch in der Automotive Industry "e-Car" verwendet werden.

Das erfindungsgemäße Spaltrohr eignet sich insbesondere bei leistungsstarken Maschinen über 1 MW und/oder großen Maschinen mit Statorinnenflächen von mehr als 1 m² da dort vor allem hohe Lagerspannungen auftreten.

Erfindungsgemäß erhält man nunmehr eine dynamoelektrische Maschine mit sehr hoher Leistungsdichte, mit sehr hohe Schutzart. Des Weiteren werden auf einfache und zuverlässige Art und Weise von Lagerspannungen verhindert auch bei getriebeintegrierten Antrieben.

Die Erfindung sowie weitere vorteilhafte Ausgestaltungen der Erfindung sind den dargestellten Ausführungsbeispielen zu entnehmen; darin zeigen:
- FIG 1: einen Längsschnitt einer dynamoelektrischen Maschine,
- FIG 2: einen weiteren Längsschnitt einer dynamoelektrischen Maschine,
- FIG 3: einen Teilquerschnitt einer dynamoelektrischen Maschine,
- FIG 4,5: je ein Spaltrohr mit leitfähigen Streifen
- FIG 6: eine prinzipiell dargestellte Windkraftanlage.

In der folgenden Figurenbeschreibung werden gleiche Komponenten in verschiedenen Figuren durch gleiche Bezugszeichen gekennzeichnet. Es ist daher möglich, dass sich bei der Beschreibung einer weiteren Figur zu einem bestimmten Bezugszeichen, welches bereits im Zusammenhang mit einer anderen, Figur erläutert wurde, keine näheren Erläuterungen finden. In einem solchen Fall kann bei der Ausführungsform der weiteren Figur davon ausgegangen werden, dass die dort mit diesem Bezugszeichen gekennzeichnete Komponente auch ohne nähere Erläuterung im Zusammenhang mit dieser weiteren Figur die gleichen Eigenschaften und Funktionalitäten aufweist, wie im Zusammenhang mit der anderen Figur erläutert.

Des Weiteren werden aus Gründen der Übersichtlichkeit teilweise nicht sämtliche Bezugszeichen in sämtlichen Figuren dargestellt, sondern nur diejenigen, auf die in der Beschreibung der jeweiligen Figur Bezug genommen wird bzw. für das Verständnis notwendig erscheinen.

Es sei angemerkt, dass sich Begriffe wie "axial", "radial", "tangential" etc. auf die in der jeweiligen Figur bzw. im jeweils beschriebenen Beispiel zum Einsatz kommende Achse 16 beziehen. Mit anderen Worten beziehen sich die Richtungen axial, radial, tangential stets auf eine Drehachse des Rotors 17 und damit auf die entsprechende Symmetrieachse des Stators 2. Dabei beschreibt "axial" eine Richtung parallel zur Achse 16, "radial" beschreibt eine Richtung orthogonal zur Achse 16, auf diese zu oder auch von ihr weg, und "tangential" ist eine Richtung, die in konstant radialen Abstand zur Achse und bei konstanter Axialposition kreisförmig um die Achse herum gerichtet ist. Der Ausdruck "in Umfangsrichtung" ist im Wesentlichen mit "tangential" gleichzusetzen.

In Bezug auf eine Fläche, bspw. eine Querschnittsfläche, beschreiben die Begriffe "axial", "radial", "tangential" etc. die Orientierung den Normalenvektor der Fläche, d.h. desjenigen Vektors, der senkrecht auf der betroffenen Fläche steht.

Der Begriff "benachbart" soll im Zusammenhang mit Bauteilen, bspw. mit Spulen oder Zähnen des Stators, ausdrücken, dass sich im Falle von "benachbarten Bauteilen" zwischen diesen beiden Bauteilen, insbesondere kein weiteres derartiges Bauteil befindet, sondern höchstens ein leerer Zwischenraum oder ggf. ein andersartiges Bauteil.

Unter dem Ausdruck "koaxiale Bauteile", bspw. koaxiale Komponenten wie Rotor 17 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse 16 ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

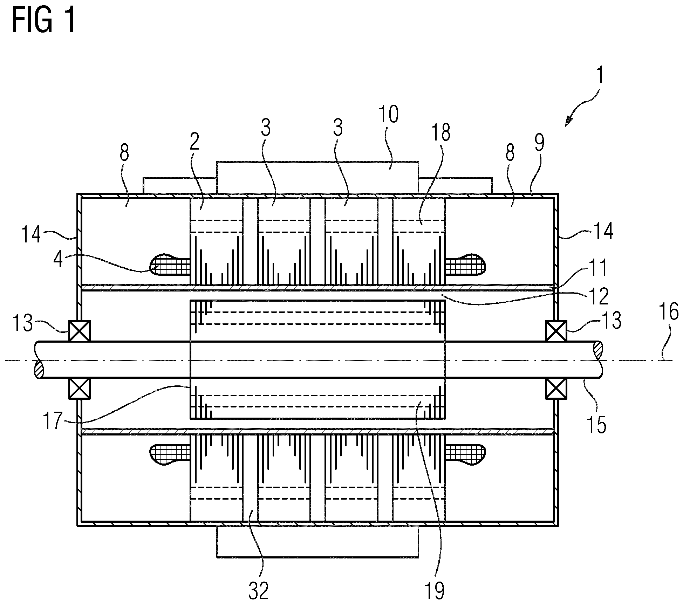

FIG 1 zeigt einen im Wesentlichen ringförmigen bzw. hohlzylindrischen Stator 2, sowie einen hier beispielhaft als Innenläufer ausgebildeten, im Wesentlichen koaxial angeordneten zylindrischen Rotor 17. Der Stator 2 weist einen magnetisch leitfähigen Grundkörper auf, mit im Wesentlichen axial verlaufende Nuten 6, in denen ein Wicklungssystem 5 angeordnet ist, das an den Stirnseiten des Stators 2 Wickelköpfe 4 ausbildet.

Der magnetisch leitfähigen Grundkörper des Stator 2 ist in vielen Fällen als Blechpaket ausgeführt. In dieser Ausführung nach FIG 1 ist der Stator 2 axial in Teilblechpakete 3 unterteilt, die voneinander einen Abstand 32 aufweisen.

Das Wicklungssystem 5 ist beispielsweise aus Zahnspulen aufgebaut. Bei einer Zahnspule befindet sich in benachbarten Nuten 6 jeweils eine Spulenseite der Zahnspule. Die vorliegende Erfindung ist jedoch nicht auf eine Anwendung mit Zahnspulen beschränkt ist. Bei dem Wicklungssystem 5 kann es sich bspw. Auch um Formspulen mit einer Nutteilung >1 handeln, ebenso wie um Einschicht-, Zweischicht-, Zahnspulen- oder verteilte Wicklungen.

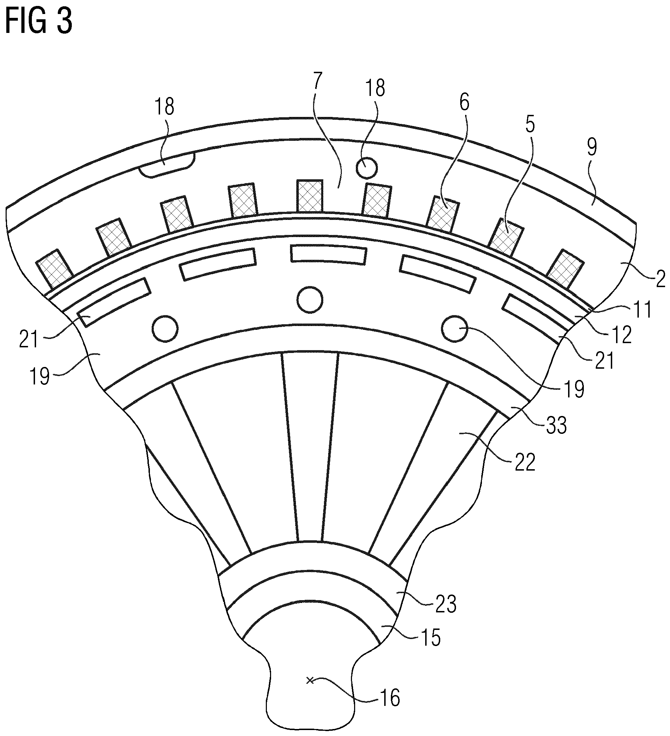

Der Rotor 17 ist innerhalb des Stators 2 und konzentrisch zu diesem angeordnet und rotiert im Betriebszustand der dynamoelektrischen Maschine 1 um eine Achse 16. Der Rotor 17 weist magnetische Mittel auf, die bspw. als Permanentmagnete 21 ausgebildet und an einer dem Stator 2 zugewandten Oberfläche des Rotors 17 angeordnet sein können. Dies ist beispielsweise in FIG 1 nur schematisch angedeutet, ohne näher auf Mittel einzugehen, die die Permanentmagnete 21 auch bei schnell drehendem Rotor 17 an diesem fixieren. Abweichend von der exemplarischen Darstellung könnte der Rotor 17 auch mit "vergrabenen" Permanentmagneten 21, gemäß FIG 3, als Kurzschlussläufer oder mit gewickelten Polen ausgeführt sein.

Der Rotor 17 bzw. sein im Wesentlichen zylindrischer magnetisch leitfähiger Rotorgrundkörper, z.B. ein Blechpaket oder ein mit einer Tragstruktur 33 versehenes Blechpaket ist drehfest mit einer Welle 15 verbunden. Eine Rotation des Rotors 17 über die Welle 15 ist aufgrund der elektromagnetischen Wechselwirkung mit dem bestromten Stator 2 auf eine nicht dargestellte anzutreibende Komponente, bspw. auf eine Komponente eines Antriebssystems eines weiteren Systems übertragbar.

Im Luftspalt 12 zwischen Stator 2 und Rotor 17 befindet sich ein Spaltrohr 11, das den Innenraum 8 des Stators 2 vom Innenraum des Rotors 17 abschirmt. Dies ermöglicht eine Flüssigkeitskühlung des Stators 2, also seines Blechpakets bzw. Teilblechpakete 3, der Wickelköpfe 4, des Wicklungssystems 5 in den Nuten 6 etc. Die Kühlflüssigkeit, beispielsweise Öl wird jeweils über den Wickelkopf 4 in den Innenraum 8 des Stators 2 gegeben, und über die Abstände 32 der Teilblechpakete 3 wieder einem Wärmetauscher 10 zugeführt und dort rückgekühlt.

Der Stator 2 ist ein einem Gehäuse 9 positioniert, das Lagerschilde 14, Lager 13 oder Lageranordnungen aufnimmt, die die Welle 15 drehbar fixieren.

Neben einem elektromotorischen Einsatz ist auch ein generatorischer Einsatz der dynamoelektrischen Maschine 1 möglich, z.B. in einer Windkraftanlage 24 mit oder ohne Getriebe 27.

Bei dynamoelektrischen Maschinen 1 (Motoren oder Generatoren) mit spannungseinprägenden Umrichtern tritt außerdem nun die sogenannte Common-Mode-Spannung auf, mit der das Wicklungssystem 5 des Stators 2 ständig aufgeladen und wieder entladen wird. Entsprechend einem der Geometrie der Maschine 1 folgenden kapazitiven Teilerverhältnis, wird diese Spannung auf den Rotor 17 übertragen und liegt als kapazitive Spannung über dem Lager 13 an. Diese Lagerspannungen können in Wälzlagern oder an die Welle 15 angeschlossenen Maschinen oder Komponenten große Schäden durch EDM(**E**lectric **D**ischarge **M**achining)-Effekte verursachen. Insbesondere können in direkt angeschlossenen Arbeitsmaschinen, z.B. Getrieben (bei sog. Getriebemotoren oder Getriebegeneratoren) nicht nur die Lagerungen 13, sondern auch die Verzahnungen der Zahnräder der Getriebe durch die EDM (Electric Discharge Machining)-Ströme schweren Schaden nehmen.

Des Weiteren erzeugen diese Umrichter durch den rapiden systembedingten Stromanstieg einen Ringfluss im Joch des Stators 2, der im Rotor 17 zu einer Spannung zwischen den beiden axialen Wellenenden führt.

Indem nun das erfindungsgemäße Spaltrohr 11 (= Stator-Can) aufgrund seiner vorgebbaren elektrischen Leitfähigkeit nicht nur zur Kapselung des Innenraumes 8 des Stators 2 genutzt wird, sondern auch Teil eines Erdungssystems einer dynamoelektrischen Maschine bildet, können die EDM vermieden werden und die Potentialdifferenz zwischen den axialen Wellenenden den Lagern 13 zumindest reduziert werden.

Dabei erhält dieses Spaltrohr 11 eine vorgebbare elektrische Leitfähigkeit, die mittels eines leitfähigen Materials (insbesondere CFK oder GFK) umgesetzt wird. Dabei weist vorzugsweise bereits implizit das Material die gewünschte elektrische Leitfähigkeit auf oder ein Basismaterial wird mit einer oder mehreren elektrisch leitfähigen Schichten versehen.

Dieses Spaltrohr 11 wird in das Erdungssystem der dynamoelektrischen Maschine 1 und/oder einer Getriebe-Generator-Einheit elektrisch leitend eingebunden. So kann das Spaltrohr 11 über eine Erdung zum Gehäuse 9 den "Kondensator" zwischen Stator 2 und Rotor 17 "zerstören" und damit die Entstehung der kapazitiven Lagerspannung verhindern oder zumindest sehr stark verkleinern.

Somit sind die bisher aufwändige Lagerisolationen nicht mehr notwendig. Ebenso kann auf Erdungsbürsten verzichtet werden.

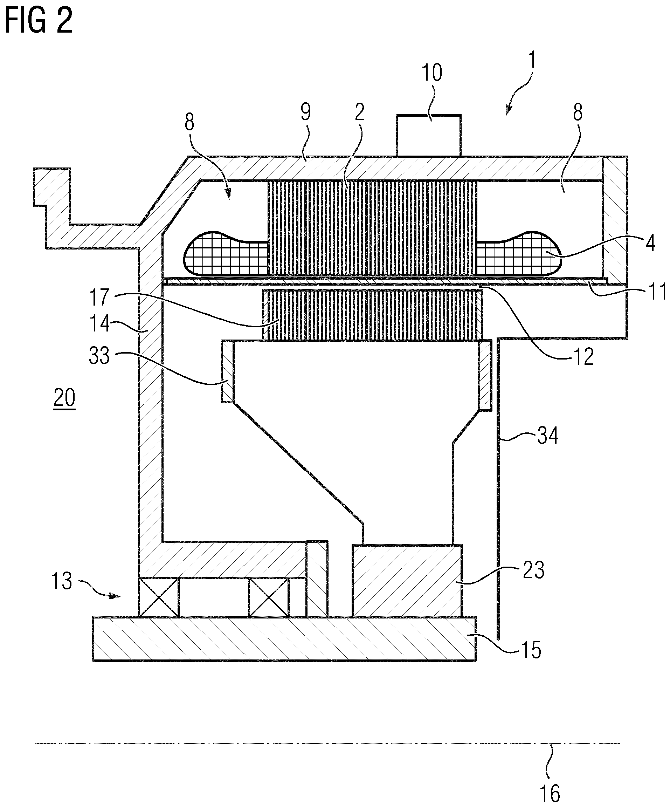

FIG 2 zeigt in einem Teillängsschnitt einen Stator 2 einer anderen dynamoelektrischen Maschine 1, die als Generator an einem direkt angrenzenden Bauraum 20 anflanschbaren Getriebes 27 einer Windkraftanlage 24 arbeitet. Der Stator 2 weist ein Blechpaket, da in diesem Fall nicht in axiale Teilblechpakete unterteilt ist- jedoch auch unterteilt sein könnte. Ansonsten ist der Stator 2 im Wesentlichen wie in FIG 1 aufgebaut.

Der Rotor 17 ist jedoch nur auf der dem Bauraum 20 zugewandten Seite fliegend gelagert. Gehäuse 9 und/oder Lagerschild 14 weisen Abdichtungsmittel des Spaltrohres 11 gegenüber dem Innenraum des Rotors 17 auf.

Wie auch in FIG 1 sind im bzw. am Blechpaket des Stators 2 Kühlkanäle 18 des Stator 2 oder auch Verteilungskanäle vorgesehen. Diese können auch innerhalb des Gehäuses 9 verlaufen.

Das Blechpaket des Rotors 17 ist auf einer, insbesondere speichenförmigen Tragstruktur 33 positioniert, was die Trägheit des Rotors 17 reduziert und eine effiziente Luftkühlung des Rotors 17 zusammen mit einer Abdeckung 34 ermöglicht. Die Tragstruktur 33 ist mit einer Nabe 23 verbunden, die auf der als Hohlwelle ausgebildeten Welle 15 drehfest fixiert ist.

Bei der einseitigen Lagerung der dynamoelektrischen Maschine 1, ergibt sich noch ein weiterer Vorteil. Durch die kapazitive und/oder ohmsche Wirkung der Lagerung (oder der Verzahnung im Falle eines direkt angeflanschten Getriebes) wird das Potential der Welle 15 im Bereich des Lagers 13 auf Gehäusepotential gehalten. Eine Lagerisolation oder Erdungsbürste ist nicht notwendig.

Diese einseitige Lagerung des Rotors 17 reduziert zusammen mit dem erfinderischen Spaltrohr 11 die elektrische Spannung an beiden axialen Wellenenden, die durch den parasitären Ringfluss entsteht. Durch die Lagerung auf einer Seite wird dort das elektrische Potential des Rotors 17 nahe am Gehäusepotential gehalten und die resultierende Spannung am anderen, freien Wellenende kann nicht zu einer Schädigung des Lagers 13 führen.

Vorteilhaft ist grundsätzlich auch, wenn andere Bauteile mit Erdkontakt oder einer gewissen Kapazität Richtung Erde (z.B. Bremsen, Drehgeber, etc.) nicht auf der Seite des freien Wellenendes montiert sind, sondern auf der Seite der Lagerung.

FIG 3 zeigt in einem Teilquerschnitt eine dynamoelektrische Maschine 1 nach FIG 2. Die Nabe 23 ist mittels Speichen 22 mit axialen Endscheiben des Rotors 17 verbunden und bildet eine starre, aber dennoch leichte Tragstruktur 33 des Rotors 17. Die speichenförmige Tragstruktur 33 weist Zwischenräume auf, die den Zugang zu nicht näher dargestellten Bremsanordnungen vereinfachen.

Die Speichen 22 sind, um eine Luftkühlung des Rotors 17 zu realisieren, derart gestaltet, dass entweder eine Sog- oder Druckwirkung bei Drehung des Rotors 17 generiert wird.

Das Spaltrohr 11 in beiden beispielhaften Ausführungen gemäß FIG 1 und FIG 2 weist nunmehr mehrere Möglichkeiten auf, eine vorgebbare elektrische Leitfähigkeit zu erhalten.

Das Spaltrohr 11 ist aus einer oder mehreren Lagen aufgebaut, die unterschiedliche elektrische Leitfähigkeiten aufweisen können.

In einer Ausführung der Erfindung ist ein nicht oder schwach elektrisch leitfähiges Spaltrohr mit einer mäßig leitfähigen Beschichtung versehen, wie z.B. Kupferleitlack. Diese Beschichtung kann an dem Spaltrohr 11 außen und/oder innen angebracht bzw. aufgesprüht sein/werden. Dabei werden Kupferpartikel in einer geeigneten Größe und/oder Anzahl pro Flächeneinheit auf dem Spaltrohr 11 vorgesehen. Die Dichte und oder Größe dieser Partikel kann in axialer Richtung und/oder tangentialer Richtung auf einer oder beiden Seiten des Spaltrohres 11 variieren.

Alternativ und/oder ergänzend dazu kann die leitfähige Schicht auch als Folie ausgeführt sein, z.B. aus Edelstahl, Aluminium, Kupfer, etc. Die Beschichtung weist typischerweise 50 bis 200 Mikrometer auf, bei Folien sind typischerweise 4 bis 20 Mikrometer vorgesehen, weiter gefasst 1 bis 500 Mikrometer vorgesehen.

Diese Folie wird auf dem Spaltrohr 11 einseitig und/oder beidseitig aufgebracht. Beispielsweise könnte die beidseitige Beschichtung für eine doppelgespeiste Asynchronmaschine von Vorteil sein.

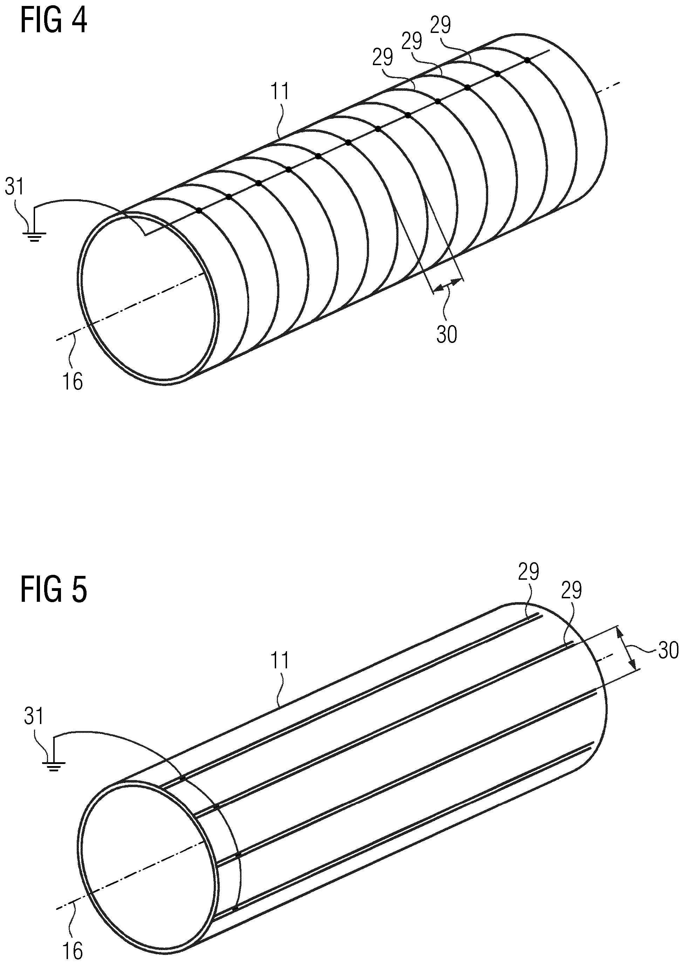

Um eine hohe Schirmwirkung des Spaltrohres 11 zu erreichen und gleichzeitig die Verluste aus Wirbelströmen gering zu halten, kann eine inhomogene Leitfähigkeit der leitfähigen Schicht vorteilhaft sein, indem beispielsweise nur Streifen 29 gemäß FIG 4, 5 aufgebracht werden. Diese Streifen 29 können lückenhaft mit einem vorgebbaren Abstand 30 ausgeführt sein, um die Wirbelstromverluste zu minimieren. Für eine hohe Schirmwirkung können die Streifen 29 aber auch überlappend ausgeführt werden. Damit die Wirbelstromverluste dann nicht zu groß werden, ist dazwischen eine Isolationsschicht vorgesehen.

Die Streifen 29 können nicht nur als Folie. sondern auch mittels eines schwach leitfähigen Lacks abschnittsweise wechselnd mit einem höher leitfähigen Lack kombiniert werden.

Unter elektrisch schwach leitfähig wird dabei bei einer Dicke der Beschichtung/Folie von 100 Mikrometern grundsätzlich eine elektrische Leitfähigkeit von ca. 10 S/m verstanden. Unter elektrisch höher leitfähig wird dabei bei einer Dicke der Beschichtung/Folie von 100 Mikrometer grundsätzlich eine elektrische Leitfähigkeit von ca. 1000 S/m verstanden.

Die leitfähige Schicht auf oder in dem Spaltrohr 11 kann sich auch verstärkt oder nur auf die Bereiche der Öffnungen der Nuten 6 des Stators 2 und ggf. zusätzlich den Bereich der Wickelköpfe 4 beschränken, da die Statorzähne 7 in der Regel bereits über das Blechpaket des Stators 2 mit dem Gehäusepotential verbunden sind. In diesen Bereichen findet dann auch vorzugsweise eine Kontaktierung mit der Erdverbindung 31 statt.

Demnach wäre beispielsweise ein Abstand der Streifen 29 in Umfangrichtung die Nutteilung des Stators 2.

Die leitfähige Schicht bzw. die leitfähigen Schichten sind auf mind. einer Seite der dynamoelektrischen Maschine 1 mit dem Gehäusepotential elektrisch sehr gut leitfähig und mit geringer Induktivität verbunden sein. Dazu werden flexible Erdungsbänder (z.B. Kabel oder Kupfergeflecht) verwendet, um u.a. unterschiedliche thermische Dehnungen auszugleichen. Unter Umständen sind mehrere Erdungsleitungen am Umfang verteilt nötig. Dies kann beispielsweise alternativ und/oder ergänzend durch einen oder mehrere federnde Kontaktstifte realisiert werden, um u.a. die thermische Ausdehnung des Spaltrohres 11 oder andere Maschinenkomponenten zu kompensieren und dennoch eine ausreichende elektrische Leitfähigkeit der Erdverbindung von Spaltrohr 11 zu Gehäusepotential zu erhalten.

Um eine bessere elektrische Anbindung zwischen mäßig leitfähiger Schicht und Gehäuse 9 zu erzielen, kann auch an den Stirnbereichen des Spaltrohres 11, also dort wo keine hohen magnetischen Felder auftreten, ein sehr gut leitfähiges Bauteil, z.B. ein Kupferring, installiert werden, der in das Erdungssystem der Maschine 1 oder einer ganzen Anlage eingebunden ist.

Wird bei einseitiger Erdung (beispielsweise nach FIG 2) die gegenüberliegende Seite des Spaltrohres 11 vergleichsweise gut gegenüber dem Gehäusepotential isoliert, z.B. über eine Dichtung und/oder eine Beabstandung, so wird eine besondere gute Schirmwirkung erzielt und die Ströme im Spaltrohr 11 vermieden, die sich ansonsten im Strompfand "Spaltrohr 11, Verbindung zu Gehäusepotential auf einer Seite , Gehäuse 9, Verbindung zu Gehäusepotential auf der gegenüberliegenden Seite" zurück in das Spaltrohr 11 ergeben würden.

Eine Verbindung auf beiden Seiten des Generators mit Gehäusepotential ist möglich und erzielt vor allem bei Umrichtern mit langsam ansteigenden Spannungsflanken z.B. im Bereich der Millisekunden oder einigen 100 µs eine verbesserte Schirmwirkung.

Das Spaltrohr 11, insbesondere die leitfähige(n) Schicht(en) des Spaltrohres 11 sind anstatt oder ergänzend zu dem Gehäuse 9 auch mit anderen Bauteilen elektrisch verbunden, um eine Schirmwirkung zu entfalten, z.B. direkt auf Erdpotential oder mit einer Leitung direkt zu einem Umrichter.

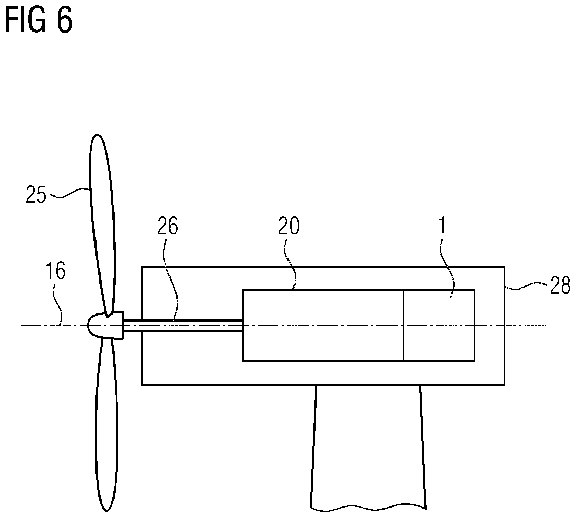

Grundsätzlich ist durch den beschriebenen Aufbau eine kompakte zuverlässige Generator-Getriebe-Einheit gemäß FIG 6 einer Windkraftanlage 24 ermöglicht. Der Generator ist fliegend gelagert, beispielsweise wie in FIG 2, so dass nur ein Lagerschild 14 und damit nur eine einseitige Erdung vorzusehen ist.

Der Stator 2 und ggf. die Getriebeeinheit 6 weist eine Ölkühlung auf. Dabei sind getrennte Kühlkreisläufe aber auch ein gemeinsamer Kühlkreislauf denkbar. Der Rotor 17 des Generators wird dabei mittels Luft gekühlt.

Dabei können die Blechpakete von Stator 2 und Rotor 17 axial durchgängig gestapelt sein. Es sind aber auch Blechpakete umsetzbar, die sich axial aus mehreren Teilblechpaketen 3 zusammensetzen, um zusätzliche radiale Kühlspalte zu schaffen.

Als Generator ist dabei eine rotatorische dynamoelektrische Maschine 1 vorgesehen, vorzugsweise eine Asynchronmaschine, beispielsweise doppelt gespeist, oder Synchronmaschine. Dabei sind Polpaarzahlen von zwei bis dreißig vorstellbar.

Dabei werden Übersetzungsverhältnisse zwischen Windrotorwelle 25 und Rotor 15 des Generators je nach Ausführung von 20 bis 200 angestrebt.

Der Grundgedanke der Erfindung lässt sich auch auf Linearmotoren übertragen.

Mit anderen Worten: dieses Spaltrohr 11 (= Stator-Can) wird nicht nur zur Kapselung des Innenraumes 8 des Stators 2 genutzt, um unterschiedliche Kühlmedien (wie Öl und Luft) zu trennen, sondern bildet auch einen Teil eines Erdungssystems einer dynamoelektrischen Maschine 1. Dabei weist dieses Spaltrohr 11 eine vorgebbare elektrische Leitfähigkeit auf, die mittels eines leitfähigen Materials (insbesondere CFK oder GFK) umgesetzt wird. Dabei weist insbesondere bereits das Material implizit die gewünschte elektrische Leitfähigkeit auf und/oder es wird ein Basismaterial mit einer oder mehreren elektrisch ausreichend leitfähigen Schichten und/oder Streifen 29 und/oder Bereichen versehen.

Dieses Spaltrohr 11 wird in das Erdungssystem einer dynamoelektrischen Maschine 1 und/oder einer Getriebe-Generator-Einheit elektrisch leitend eingebunden. So kann das Spaltrohr 11 über eine Erdung zum Gehäuse 9 den "Kondensator" zwischen Stator 2 und Rotor 17 "zerstören" und damit die Entstehung der kapazitiven Lagerspannung verhindern oder zumindest sehr stark verkleinern.

Wenn nunmehr dieses Spaltrohr 11 zusammen mit einem rein auf einer Seite gelagerten Rotor 17 (fliegend gelagert, wie in FIG 2) verwendet wird, wird die elektrische Spannung an beiden axialen Wellenenden vermieden, die durch den parasitären Ringfluss generiert wird. Durch die Lagerung auf einer Seite wird dort das elektrische Potential des Rotors 17 nahe am Potential des Gehäuses 9 gehalten und die resultierende Spannung am anderen, freien Wellenende kann nicht zu einer Schädigung eines Lagers 13 führen.

Vorteilhaft ist auch, wenn andere Bauteile mit Erdkontakt oder einer gewissen Kapazität Richtung Erde (z.B. Bremsen, Drehgeber, etc.) nicht auf der Seite des freien Wellenendes montiert sind, sondern auf der Seite dieser geerdeten Lagerung.

Dabei weist das Spaltrohr 11 eine mittlere elektrische Leifähigkeit auf, die in axialer und/oder tangentialer Richtung im Bereich von 1 S/m bis 10000 S/m liegt. Da das Spaltrohr 11 (CFK- oder GFK-Rohre) und/oder die verwendeten Beschichtungen (Lacke oder Folien) ggf. inhomogen aufgebaut sind, wird von einer mittleren elektrischen Leitfähigkeit gesprochen.

Die mittlere elektrische Leifähigkeit des Spaltrohres 11, die in axialer und/oder tangentialer Richtung im Bereich von 1 S/m bis 10000 S/m liegt, bezieht sich insbesondere auf eine (radiale) Dicke von 1 mm.

Bei entsprechend dünnerer oder dickerer Schichtstärke des Spaltrohres 11 muss die elektrische Leitfähigkeit entsprechend ausgehend von diesem Intervall oder innerhalb dieses Intervalls höher bzw. niedriger sein.

Eine besonders gute Schirmwirkung wurde beispielsweise bei einer Beschichtung von 1 mm Bezugsdicke und einer Leitfähigkeit von über 100 S/m erzielt.

## Patentansprüche

1. Spaltrohr (11) einer dynamoelektrischen rotatorischen Maschine (1), welches ausgebildet ist, um in einem Luftspalt (12) zwischen einem Rotor (17) und einem Stator (2) der dynamoelektrischen rotatorischen Maschine (1) angeordnet zu werden, um Stator (2) und Rotor (17) gegeneinander abzudichten, **dadurch gekennzeichnet, dass** das Spaltrohr (11) zumindest abschnittsweise eine mittlere elektrische Leifähigkeit aufweist, die in axialer und/oder tangentialer Richtung im Bereich von 1 S/m bis 10000 S/m liegt.

2. Spaltrohr (11) nach Anspruch 1, **dadurch ge- kennzeichnet**, dass das Spaltrohr (11) als eine im Wesentlichen bzgl. der Achse (16) rotationssymmetrische, dichte Tragstruktur ausgebildet ist, insbesondere CFK oder Kunststoff aufweist.

3. Spaltrohr (11) nach Anspruch 2, **dadurch ge- kennzeichnet**, dass das Spaltrohr (11) hohlzylindrisch ist.

4. Spaltrohr (11) nach einem der vorhergehenden Ansprüche, **dadurch gekennzeichnet, dass** das Spaltrohr (11) zumindest auf einer Mantelseite des Spaltrohres, insbesondere des Hohlzylinders abschnittsweise eine leitfähige Schicht aufweist.

5. Spaltrohr (11) nach einem der vorhergehenden Ansprüche, **dadurch gekennzeichnet, dass** die Schicht aufgesprüht oder als Folie ausgebildet ist.

6. Spaltrohr (11) nach einem der vorhergehenden Ansprüche, **dadurch gekennzeichnet, dass** die Schicht innerhalb des Bereichs der elektrischen Leitfähigkeit von 1 S/m bis 10000 S/m inhomogen ausgeführt ist.

7. Spaltrohr nach einem der vorhergehenden Ansprüche, **da**- **durch gekennzeichnet**, dass die leitfähige Schicht mittels leitfähigen Streifen (29) ausgeführt ist, die innerhalb des Bereichs von 1 S/m bis 10000 S/m liegen.

8. Dynamoelektrische rotatorische Maschine (1) mit:
- einem Stator (2), der ein in Nuten (6) angeordnetes Wicklungssystem (5) aufweist, das an den Stirnseiten des Stators (2) Wickelköpfe (4) ausbildet,
- einem Rotor (17), der durch einen Luftspalt (12) von dem Stator (2) beabstandet und mit einer Welle (15) drehfest verbunden ist, wobei die Welle (15) durch zumindest ein Lager (13) um eine Achse (16) drehbar positioniert ist,
- einem Spaltrohr (11), das sich im Luftspalt (12) befindet und einen Innenraum(8) des Stators (2) vom Innenraum () des Rotors (17) trennt, wobei das Spaltrohr (11) zumindest abschnittsweise eine mittlere elektrische Leifähigkeit aufweist, die in axialer und/oder tangentialer Richtung im Bereich von 1 S/m bis 10000 S/m liegt, und in das Erdungssystem der dynamoelektrischen rotatorischen Maschine (1) eingebunden ist, insbesondere mit einem Gehäuse (9) und/oder einem Lagerschild (14) elektrisch leitend verbunden ist.

9. Dynamoelektrische rotatorische Maschine (1) nach einem der vorhergehenden Ansprüche 4 bis 7, **dadurch ge**- **kennzeichnet,** dass sich die leitfähige Schicht des Spaltrohres (11) zumindest auf die Bereiche der Nuten (6) des Stators und/oder den Bereich der Wickelköpfe (4) erstreckt.

10. Dynamoelektrische rotatorische Maschine (1) nach einem der vorhergehenden Ansprüche, **dadurch gekenn- zeichnet,** dass die Welle (15) zumindest auf einer Seite fliegend gelagert ist.

11. Dynamoelektrische rotatorische Maschine (1) nach einem der vorhergehenden Ansprüche, **dadurch gekenn- zeichnet,** dass zumindest der Stator (2) eine Flüssigkeitskühlung aufweist.

12. Getriebe-Generator-Einheit mit einer dynamoelektrischen rotatorischen Maschine (1) nach einem der vorhergehenden Ansprüche, wobei das Spaltrohr (11) und die dynamoelektrische Maschine (1) in ein Erdungssystem der Getriebe-Generator-Einheit eingebunden ist, insbesondere mit einer niedrigen Impedanz elektrisch leitend verbunden sind.

13. Windkraftanlage mit einer Getriebe-Generator-Einheit nach Anspruch 12, wobei insbesondere das Spaltrohr (11), die dynamoelektrische Maschine (1), und die Getriebe-Generator-Einheit in ein Erdungssystem der Windkraftanlage eingebunden ist, insbesondere diese Komponenten mit einer niedrigen Impedanz elektrisch leitend verbunden sind.
